# NEW EUROPEAN PATENT SPECIFICATION

(11) **EP 3 810 954 B2**
(45) Date of publication and mention of the opposition decision: **11.06.2025**
(45) Mention of the grant of the patent: 03.08.2022
(21) Application number: 19734910.3
(22) Date of filing: 06.06.2019
(51) Int. Cl.: F16D 65/097, F16D 55/228

(54) **SPRING FOR FRICTION PADS IN A DISC BRAKE CALIPER**
FEDER FÜR REIBBELÄGE IN EINEM SCHEIBENBREMSSATTEL
RESSORT POUR PLAQUETTES DE FREIN DANS UN ÉTRIER DE FREIN À DISQUE

(30) Priority: 20.06.2018 IT 201800006505
(43) Date of publication of application: 28.04.2021
(73) Proprietor: BREMBO S.p.A., 24035 Curno (BERGAMO) (IT)
(72) Inventor: CRIPPA, Cristian, 24035 Curno, Bergamo (IT); MECOCCI, Andrea, 24035 Curno, Bergamo (IT); MAMBRETTI, Mauro, 24035 Curno, Bergamo (IT)
(74) Representative: Leihkauf, Steffen Falk
(86) International application number: PCT/IB2019/054728
(87) International publication number: WO 2019/243936

(56) References cited:
- EP-A2- 0 560 146
- WO-A1-2008/075386
- WO-A1-2017/085619
- US-A1- 2012 186 918
- US-A1- 2015 247 542
- US-A1- 2016 185 323
- US-A1- 2017 102 042
- US-B2- 9 862 362

## Description

The present invention relates to a spring for elastically retaining and positioning the pads in a disc brake caliper, as well as to a disc brake equipped with such a spring.

Cross-shaped expansion springs for fixed caliper disc brakes provided with a longitudinal piece, the ends of which abut e.g. against two support pins which support the pads, and a cross piece, the ends of which abut against the upper edges of the pads in order to retain the pads elastically in a "lowered" position, are known. By virtue of an inclined configuration of the lower surface of the cross piece, expansion springs bias the pads away from one another to ensure a separation of the pads from the brake disc after each braking.

The ends of the longitudinal piece of the known expansion springs usually engage both support pins from underneath and the cross piece of the expansion springs presses from above in springing manner on the support plates of the pads.

The known expansion springs are thus used to obtain a three-fold action:
- to reduce the vibrations of the pads,
- to distance the brake pads from the brake disc in order to reduce or eliminate a residual braking torque due to undesired contacts between the brake pads and the brake disc with the brake deactivated,
- to obtain a uniform wear of the friction linings of the pads.

The expansion springs of the prior art abut on the pads with an application angle of the elastic force of less than 15° with respect to the plane of the pad and consequently transmit a high radial elastic force and a much lower elastic axial force to the pad. The axial elastic force moves the pads away from each other and from the brake disc along a planned axial sliding direction. In contrast with this, the radial elastic force generates a frictional resistance which opposes the axial thrust of the spring and thus the mutual distancing of the pads in the resting interfaces between the pads and the caliper, e.g. in resting interfaces between a support pin and a corresponding pad hole.

With the expansion springs of the prior art, the axial elastic force is insufficient to overcome the frictional resistance generated by the elastic radial elastic force in every operating condition of the brake in complete and reliable manner.

An incomplete detachment between brake pads and disc thus often occurs with the brake deactivated, resulting in:
- undesired residual braking moments,
- unplanned pad position and orientation,
- non-uniform pad wear.

Furthermore, the axial elastic force applied by the expansion springs of the prior art varies according to the wear state (and therefore according to the axial position) of the friction pad.

Consequently, the application conditions of the elastic forces and thus the constraint conditions of the pads are uncertain, difficult to predict with precision and variable over time. The balance of the moments acting on the friction pad is undesirably sensitive to (and influenced by) frictions and by geometric variability.

It follows that the distancing function of the pads from the brake disc is not ensured during the entire life cycle of the pad which gradually wears. US9862362B2 and WO2017/085619A1 describe friction pad spring solutions which form a closest state of the art for the present invention.

It is therefore the object of the present invention to provide an improved spring for pads and disc brake having such features as to reduce the residual braking torque with the brake deactivated and to improve and make more uniform the distancing function of the pads from the brake disc also in the presence of pad wear and during their entire life cycle.

In the scope of the general object of the invention, further objects relate to a reduction of the sensitivity (or in other words: an improvement of the robustness) of the elastic constraint system of the friction pads and in the balance of the moments acting on the friction pads, to geometric tolerances, friction effects and variations of the supporting conditions between the pads and the caliper and between the expansion spring and the pad.

These and other objects are achieved by a spring for pads according to claim 1 and by a disc brake according to claim 7. The dependent claims relate to advantageous and preferred embodiments.

In order to better understand the invention and appreciate its advantages, some nonlimiting examples of embodiments will be described below with reference to the accompanying figures, in which:
figure 1 is a radial section view (with respect to a rotation axis of a disc brake) of a disc brake according to an embodiment, in deactivated configuration,
figure 2 shows the disc brake in figure 1 (with the brake disc removed for greater clarity) in an activated configuration,
figure 3 is a bottom view of the disc brake in figure 1,
figure 4 is a side view of the disc brake in figure 1,
figures 5 and 6 are perspective views of a disc brake pad according to an embodiment,
figure 7 is a rear view of the friction pad in figure 5,
figure 8 is a side view of the friction pad in figure 5,
figures 9, 10, 11 are views of a spring for friction pad according to an embodiment,
figure 12 is a perspective view of a disc brake (with brake disc removed for clarity) according to a further example which is not part of claimed invention,
figure 13 is a radial section view (with respect to a rotation axis of a disc brake) of the disc brake in figure 12,
figure 14 is a radial section view of the disc brake in figure 12, in a deactivated brake configuration,
figure 15 is a radial section view of the disc brake in figure 12, in an activated brake configuration,
figure 16 is a side view of the disc brake in figure 12,
figure 17 is a top view of the disc brake in figure 12,
figure 18 is a rear view of the disc brake in figure 12,
figure 19 is a longitudinal section view of the disc brake in figure 12,
figures 20-23 are views of a spring for friction pad according to an example which is not part of the claimed invention.

With reference to the figures, a disc brake, in particular for use on motor vehicles, is globally indicated by reference numeral 1. In the specific case, it is a disc brake of the fixed caliper type. However, the invention also applies to so-called floating calipers and to brakes with floating caliper.

The disc brake 1 comprises a caliper 2 and a brake disc 3. The caliper 2 can be fixed, e.g. by means of fixing screws, to a vehicle suspension, while the brake disc 3, provided with an annular braking band 4, can be connected to the wheel hub of the vehicle (not shown).

The caliper 2 comprises two side walls 5 which are arranged on both sides of the brake disc 3 and connected to each other by means of connecting elements which extend straddling the braking band 4 of the brake disc 3. Advantageously, the caliper 2 comprises two end bridges 6 delimiting a central opening 7, as well as at least or exactly one linkage 8 arranged in the central opening 7 and which structurally connects the two side walls 5 so as to limit the deformation of the caliper 2 during braking. Preferably, the linkage 8 is arranged approximately at the center of the central opening 7 so as to divide it into two half-openings 9, 10 of substantially equal circumferential extension (with reference to the brake disc 3).

At least two pads 11 having a support plate 12, e.g. made of steel, and a friction material lining 13, are each arranged on one side of the brake disc 3 at the braking band 4 and housed in dedicated seats 14 of the caliper 2 and supported by at least one, preferably two support pins 15. The size and mechanical strength of the support pins 15 is sufficient to allow the pads 11 to hang from or rest on such support pins 15, e.g. by means of a support hole or slot 16 formed in the support plate 12, preferably in a side end portion 17 or in two opposite side end portions 17 of the support plate 12, preferably in a radially inner half (with respect to a rotation axis 18 of the brake disc 3) and/or at or near a lower (i.e. radially inner) edge 19 of the support plate 12, in order to prevent radial displacements (related to the rotation axis 18 of the brake disc 3) of the friction pads 11. It is worth noting that the support pins 15 for the friction pads 11 generally do not contribute to the overall rigidity of the caliper 2.

The friction pads 11 are movable in direction perpendicular to the plane 55 of the brake disc 3 along the support pins 15 and are biased by thrust means, e.g. such as one or more hydraulic cylinder-piston units 20, 21 arranged in the caliper 2, so as to clamp, via the friction lining 13, a sector of the braking band 4, the surface and shape of which corresponds to those of the friction linings 13.

The disc brake 1 further comprises at least one pad spring 22 which applies an elastic preload onto the pads 11 to keep the friction pads 11 distanced from the brake disc 3 with the brake deactivated. The same one or more springs 22 or one or more additional springs 23 for pad can perform the further function of stopping the friction pads 11 elastically in the seats 14 and thus reducing the onset of vibrations and brake noise due to movements of the pads with respect to the caliper 2.

Generally, the disc brake 1 may comprise four springs 22, respectively two associated with each friction pad 11.

The spring 22 comprises an elongated plate 27 bent so as to form a descending fixing stretch 24, an ascending resting stretch 25, opposite to the fixing stretch 24, and an arch-shaped return stretch 26 formed between the fixing stretch 24 and the resting stretch 25, wherein the return stretch 26 extends from a narrowing region 29, in which the fixing stretch 24 and the resting stretch 25 locally approach each other, in form of a widened loop with respect to the narrowing region 29 to a lower apical region 28 of the spring 22.

The fixing stretch 24 forms a fixing seat 30 for interlocking the spring 22 to a corresponding fixing portion 31 formed by the caliper 2 or by the support plate 12 of the friction pad 11.

The resting stretch 25 forms a plate-shaped contact portion 32, preferably flat, for freely resting (with slipping possibility) the spring 22 against a corresponding contact surface 33 formed by the support plate 12 of the friction pad 11 or by the caliper 2.

With the spring 22 undeformed, the plate-shaped contact portion 32 extends, starting from the narrowing region 29, in diverging manner with respect to the fixing stretch 24 and is inclined with respect to the fixing portion 31 with an inclination angle 34 of less than 90°, preferably less than 60°.

The particular configuration of the spring 22 allows a fixing thereof by interlocking by means of the fixing seat 30 and a free support thereof (with possibility of sliding and orientation) by means of the plate-shaped contact portion 32, as well as an elastic widening of the distance between the fixing stretch 24 and the resting portion 25, against the elastic resistance generated by the elastic deformation of the large loop formed by the return portion 26. By virtue of the widening of the loop of the return stretch 26 with respect to the narrowing region 29, the return stretch 26 makes available a sufficiently intense elastic force towards the fixing stretch 24 and resting stretch 25 so as to effectively push the friction pads 11 away from the brake disc 3.

According to an aspect of the invention, the spring 22 is fixed in the disc brake 1 with the return stretch 26 facing towards a lower (or radially inner) side 46 of the caliper 2, i.e. towards the rotation axis 18 of the brake disc 3 and extending at least partially, possibly completely, under the friction pad 11 (or in other words, radially more inwards with respect to the friction pad 11) and with the resting stretch 25 and the fixing stretch 24 both extending towards an upper side 47 of the caliper 2, i.e. radially outwards.

This low positioning of the springs 22 allows more space for the elastic loop of the return stretch 26 of the spring 22 and for an optimized choice of connection/resting regions between the springs 22 and the friction pads 11 regardless of the possible presence of the aforesaid additional springs 23 (anti-vibration springs) which are usually placed on a radially outer side of the friction pads 11.

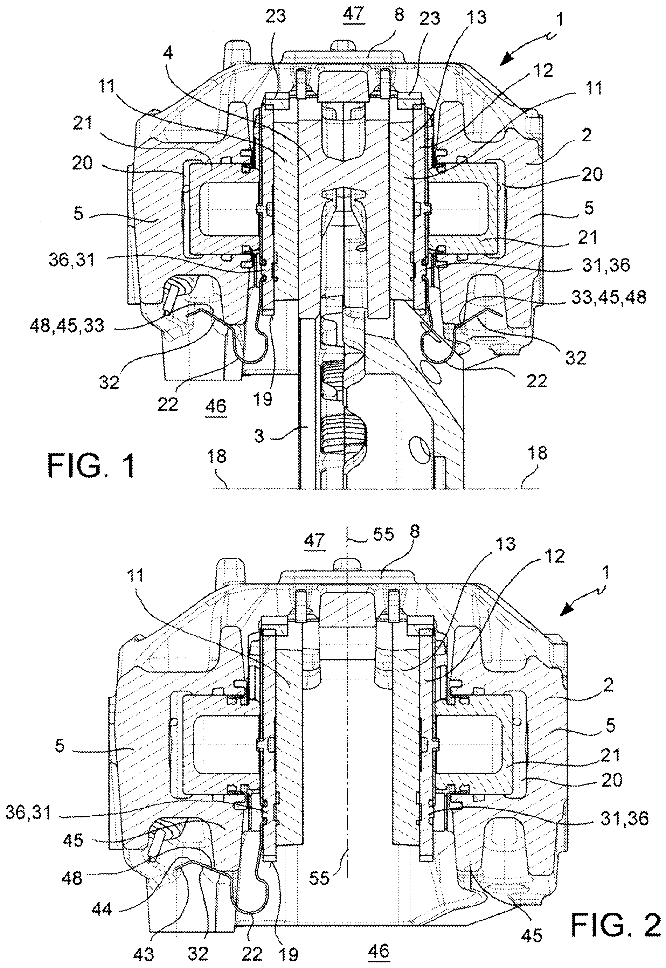

According to an embodiment (figures 1-11), the fixing portion 31 is formed on the support plate 12 of the friction pad 11 and the contact surface 33 is formed on the caliper 2.

Advantageously, the fixing seat 30 of the spring 22 is locked onto the support plate 12 of the friction pad 11 on an outer side of the friction pad 11 facing away from the brake disc 3 and the contact portion 32 of the spring 22 abuts from below (i.e. from a radially inner side in a radially outer direction) against a wall portion 45 formed by the inner wall 5 and also protruding towards the lower (radially inner side) 46 of the caliper 2 (figures 1, 2).

More precisely, the contact portion 32 of the spring 11 extends in inclined manner from under the side portion 45 axially outwards (away from the brake disc 3) and radially upwards or towards the upper (radially outer) side 47 of the caliper 2 and rests in free contact and with the possibility of sliding on an axially outer edge 48 of a lower edge of the wall portion 45.

The contact portion 32 applies an axial elastic force towards the brake disc 3 and a radial elastic force towards the upper (radially outer) side 47 of the caliper 2 on the wall portion 45. The fixing stretch 24 of the spring 22 applies an axial elastic force away from the brake disc 3 and a radial elastic force towards the lower (radially inner) side 46 onto the friction pad 11.

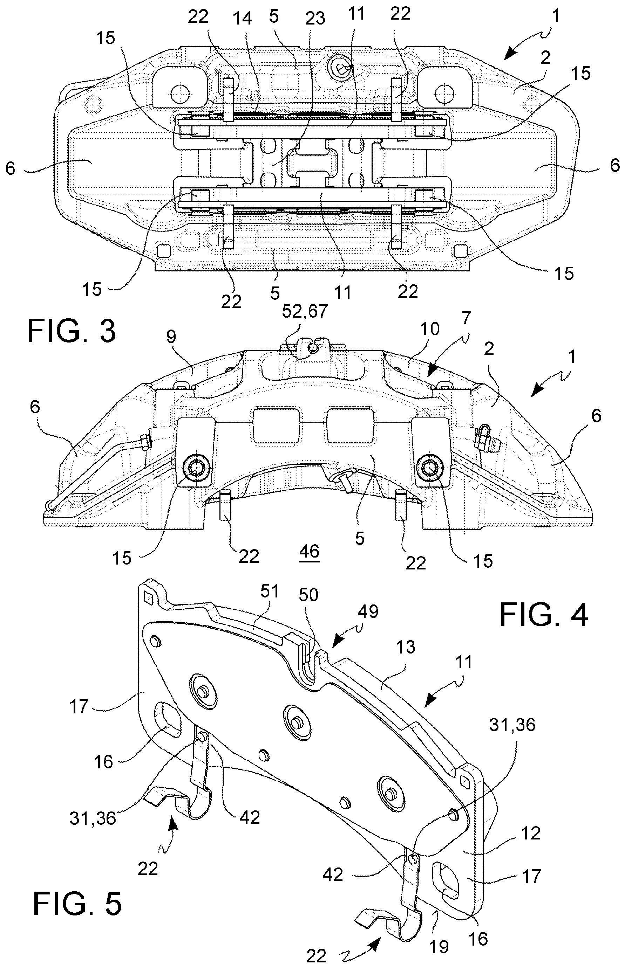

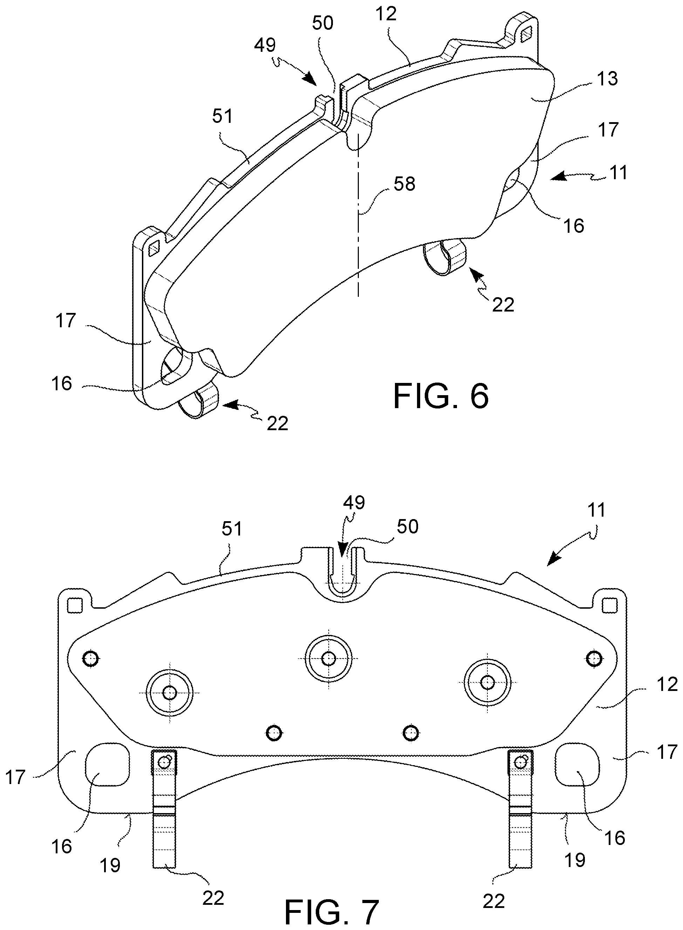

According to a further embodiment (figure 5 and 7), the fixing portions 31 are formed in the support plate 12 at the same height (radial with respect to rotation axis 18 of the brake disc 3) of the support holes 16. Advantageously, the fixing portions 31 are each positioned laterally next to a support hole 16 and, preferably, on one side of the support hole 16 directed towards a circumferentially central area 49 of the friction pad 11.

Advantageously, both the support holes 16 and the fixing portions 31 are positioned at lower, i.e. radially inner, end zones and/or in side end zones 17, i.e. circumferentially more outward, of the support plate 12 of the friction pad 11.

In the embodiment shown in figure 5, the lower end zone has a radial extension either equal to or less than 1/3 of the total radial extension (height) of the pad 11. Similarly, the side end zones 17 have a circumferential extension either equal to or smaller than 1/3, preferably equal to or smaller than 1/4, of the total circumferential extension (width) of the pad 11.

According to a further embodiment (figures 5, 6, 7), the support plate 12 and possibly also the friction lining 13 of the friction pad 11 may form a central upper cavity 50 formed in a radially outer edge 51 of the pad 11 and positioned centrally between the fixing portions 31, to allow the passage of a central upper pin 52 fixed to both of the side walls 5 of the caliper 2 and forming a further positioning reference for the friction pads 11 and/or for the aforesaid further spring 23. Alternatively, the upper central cavity 50 can serve to allow the fixing of one or more sensors for signaling wear of the friction material.

The additional spring 23 can be supported by the caliper 2 and positioned on the radially outer side 47 of the caliper 2 and elastically push against the radially outer edge 51 of the support plate 12 of the friction pad 11, to bias the friction pad 11 towards the radially inner side 46 against the support pins 15.

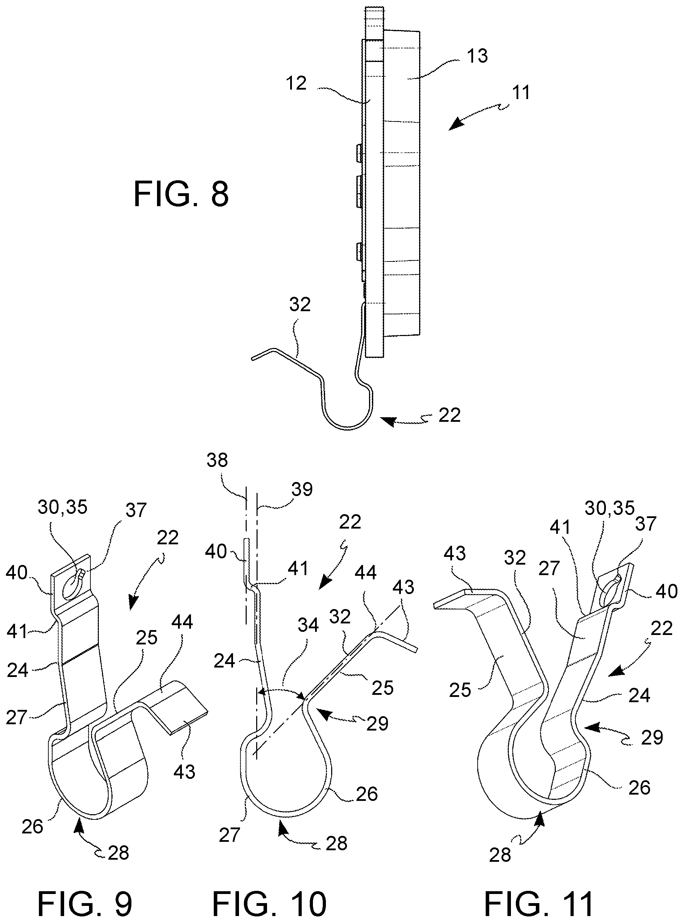

According to an embodiment (figure 9), the fixing seat 30 may comprise a through hole 35 formed in an end portion 40 of the fixing stretch 24 and adapted to accommodate a corresponding protrusion 36 formed (e.g. riveted or drawn) in or by the fixing portion 31. The through hole 35 may have a substantially circular shape with one or more external recesses 37 which perform, for example, an anti-rotation locking function of the spring, being the outer recess 37 then filled by the protuberances 31 and 36 which are plastically deformed to constrain the springs to the pad.

According to the invention (figures 9, 5), a step 41 is formed between the end portion 40 of the fixing stretch 24 and a further adjacent portion of the fixing stretch 24, which makes an offset, between a fixing plane 38 defined by the end portion 40 and an extension plane 39 on which the portion adjacent to the fixing stretch 24 extends.

By virtue of the offset of the end portion 40, away from resting stretch 25, the entire end portion 40 or at least one part of the fixing stretch adjacent to the end portion 40 can be accommodated (with shape coupling) in a dedicated recess 42 formed by the fixing portion 31 (figure 5). In this manner, it is possible to interlock the spring 22 against rotations about an axis parallel to the rotation axis of the brake disc 3.

According to a further embodiment, a free end portion 43 of the resting stretch 25 bent with respect to the contact portion 32 (adjacent thereto) in a direction facing away from the fixing stretch 24, so that:
- the free end portion 43 protrudes away from the fixing portion 24 and, preferably, downwards (i.e. radially towards the rotation axis 18) and/or
- a convex bending edge 44 is formed (preferably without sharp edges) facing in the direction opposite to the lower apical region 28 of the spring 22, i.e. upwards or radially outwards, between the contact portion 32 and the free end portion 43.

In this manner, the free end portion 43 forms a guided and snapping positioning of the contact portion 32 onto the contact surface 33, during the axial insertion (with respect to the rotation axis 18 of the brake disc 3) of the friction pad 11 on the support pins 15 and the seat 14 formed in the caliper 2 (figures 1,2).

Advantageously, the spring 22 is formed in one piece, preferably of plate-shaped or strip-shaped metallic material contoured so as to display only curvatures about axes substantially parallel to one another and substantially parallel to the plane 55 of the brake disc 3, with the spring 22 mounted in the caliper 2.

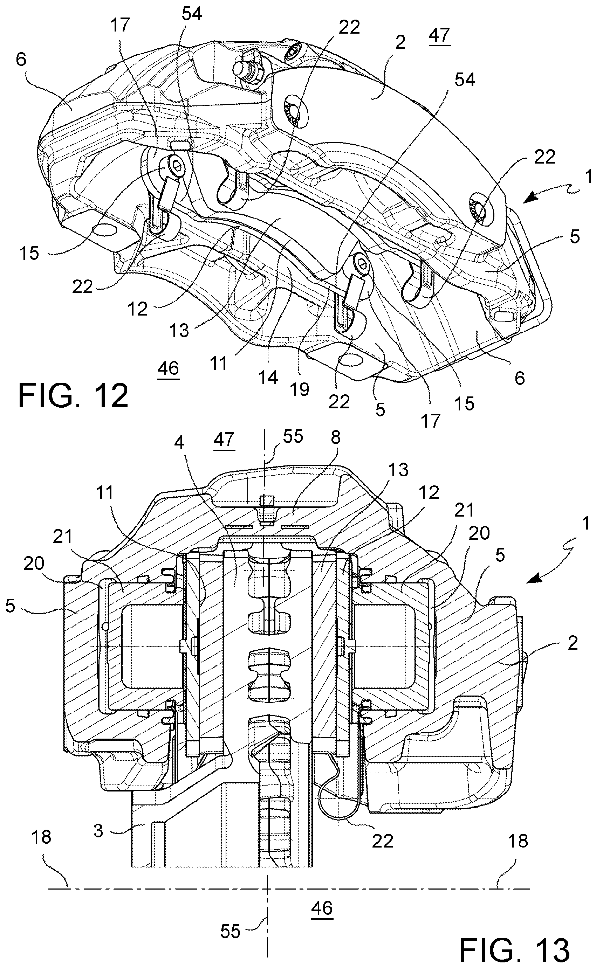

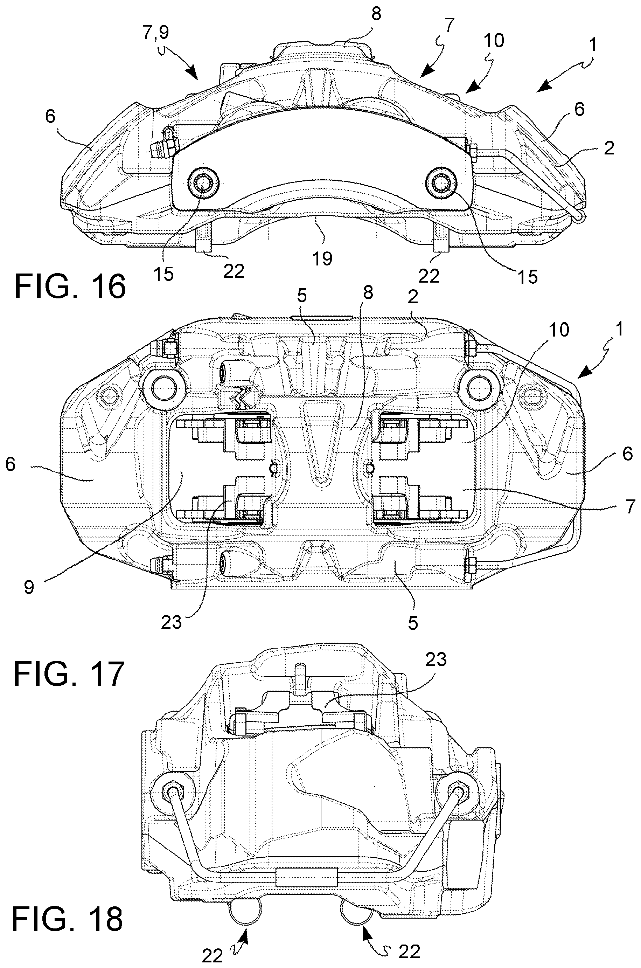

In accordance with a further example (figures 12-23), the fixing portion 31 is formed at the caliper 2, preferably at the support pin 15, and the contact surface 33 is formed at the support plate 12 of the friction pad 11.

Advantageously, the fixing seat 30 of the spring 22 is locked to the support pin 15 on a rear side of the friction pad 11 facing away from the brake disc 3 and the contact portion 32 of the spring 22 abuts from below (i.e. on a radially inner side in radially outer direction) against a lower (i.e. radially inner) edge 19 of the support plate 12 of the friction pad 11 (figure 12, 14, 15).

More precisely, the contact portion 32 of the spring 11 extends in inclined manner from below the support plate 12 axially inwards (towards the brake disc 3) and radially upwards or towards the upper (radially outer) side 47 of the caliper 2 and rests in free contact and with possibility of sliding against an axially inner edge 54 of the inner edge 19.

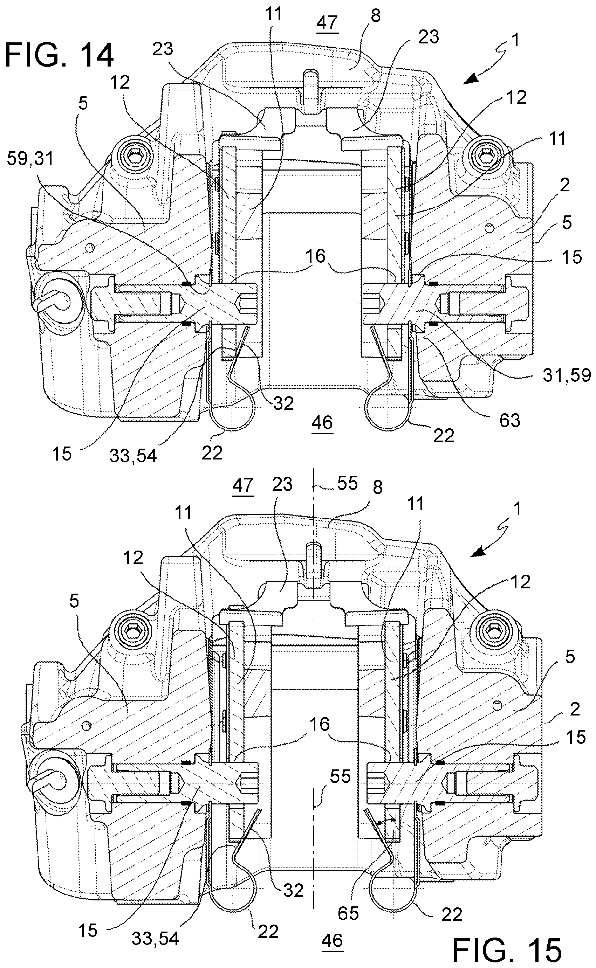

The contact portion 32 applies an axial elastic force away from the brake disc 3 and a (nearly negligible) radial elastic force towards the upper (radially outer) side 47 of the caliper 2 on the friction pad 11. Indeed, the inclination angle 65 (figure 15) of the contact portion 32 with respect to the plane 55 the brake disc 3 is lower than 45°, preferably less than or equal to 30°, so as to transmit a force component prevalent in axial direction. The fixing stretch 24 of the spring 22 applies on the support pin 15 an axial elastic force in approaching direction toward the brake disc 3 and a (nearly negligible) radial elastic force towards the lower (radially inner) side 46 (figures 14, 15).

According to an example (figures 15, 19, 23), the fixing portions 31 for the springs 22 are formed in the support pins 15 in a centered manner with respect to the support holes 16 of the friction pads 11.

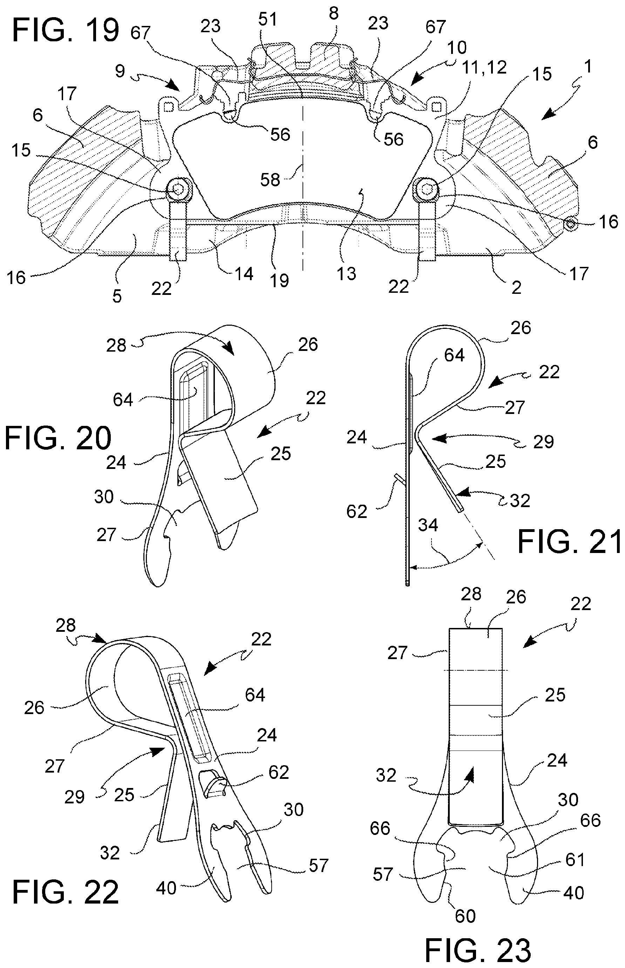

Advantageously, both the support holes 16 and the fixing portions 31 (formed not at the friction pad 11 but at the support pins 15) are positioned at lower, i.e. radially inner, end zones and/or in side end zones 17, i.e. circumferentially more outward, of the support plate 12 inserted on the support pins 15 (figures 15, 19).

In the example shown in figure 19, the lower end zone has a radial extension either equal to or smaller than 2/5, preferably equal to or smaller than 1/3 of the total radial extension (height) of the pad 11. Similarly, the side end zones 17 have a circumferential extension either equal to or smaller than 1/5, preferably equal to or smaller than 1/6, of the total circumferential extension (width) of the pad 11.

According to a further example (figure 19), the support plate 12 and possibly also the friction lining 13 of the friction pad 11 can form one or more upper cavities 56 formed in a radially outer edge 51 of the pad 11 and positioned symmetrically with respect to a radial median plane 58 of the pad 11 to allow fixing of one or more sensors for signaling the friction material wear.

The additional spring 23 can be supported by the caliper 2 and positioned on the radially outer side 47 of the caliper 2 and elastically push against the radially outer edge 51 of the support plate 12 of the friction pad 11, to bias the friction pad 11 towards the radially inner side 46 against the support pins 15.

Advantageously, the shape of the friction pad 11, seen from the side facing towards the disc brake 3, can be symmetrical with respect to the median radial plane 58 of the friction pad 11. With further advantage, also the position of the springs 22 is symmetrical with respect to the median radial plane 58 of the friction pad 11 (figures 6, 19).

According to an example (figures 22, 23), the fixing seat 30 may include a recess 57 formed in an end portion 40 of the fixing stretch 24 and adapted to embrace the corresponding support pin 15 and possibly to be inserted in a groove 59, preferably annular, possibly formed in the support pin 15. The recess 57 forms a converging inlet portion 60 and a inner portion 61 wider with respect to the input portion 60 and, preferably, two or more projections 66 which protrude into the inside of the recess 57, so as to form a lead-in for a centered insertion of a recess 57 of the spring 22 into the circumferential groove 59 of the supporting pin 15 and to allow a temporary widening of the recess 57 with the purpose of snap-engaging with the support pin 15.

According to an example (figures 15, 22), the fixing stretch 24 of the spring 22 forms a tongue 62 bent out from a plane of the fixing stretch 24 preferably towards a side facing away from the brake disc 3, and adapted to be used as thrust plane for fitting the spring 22 in the support pin 15. In this manner, it is possible to fix the springs 22 to the support pins 15 by means of a simple insertion by snapping from below, during which insertion the end portions 40 are inserted or elastically snap into the corresponding groove 59 (if provided) and blocks the spring 22 to the support pin 15.

In this regard, the fixing portion 31, in particular, the annular groove 59, is advantageously formed on a plane immediately adjacent to an inner surface of the side wall 5 of the caliper 2.

According to a further example (figures 20-22), the fixing stretch 24 of the spring 22 forms a reinforcing rib 64, preferably a local deformation produced by pressing, e.g. a indent or a drawing, which stiffens the fixing stretch 24 so as to concentrate the elastic deformation of the spring 22 mainly in its return stretch 26 and to increase the total rigidity of the spring 22, the elastic material, e.g. steel for springs, used being equal.

Advantageously, the spring 22 is formed in one piece, preferably of plate-shaped or strip-shaped metallic material contoured so as to display only curvatures about axes substantially parallel to one another and substantially parallel to the plane of the brake disc 3, with the spring 22 mounted in the caliper 2 (with the exception of the anti-rotation tongue 62 and of the reinforcing rib 64).

From the description provided, the person skilled in the art will appreciate that the spring 22 for friction pad 11 and the disc brake 1 according to the invention keeps the pads detached from the brake disc when the brake is deactivated, thereby reducing the residual braking torque with the brake deactivated.

Furthermore, the disc brake 1 and the spring 22 according to the invention are less sensitive to geometric tolerances, to the effects of friction and to variations in the support conditions between the pads 11 and the caliper 2 and between the spring 22 and the pad 11. As a result, the springs 22 provide a more intense axial elastic bias, which is more uniform even in the presence of a progressive wear of the friction lining 13 of the pads 11.

Furthermore, the spring 22 according to the invention can be easily fitted onto the caliper and onto the friction pad and its position does not violate the space of other functional components of the brake, whereby allowing an optimized placement and sizing targeted for each of the functional components.

Obviously, a person skilled in art may make further changes and variants to the spring 22 for pads 11 and to the disc brake 1 according to the present invention all without departing from the scope of protection of the invention, as defined in the following claims.

## Claims

1. A spring (22) for friction pads (11) associable with a caliper (2) of a disc brake (1) for elastically biasing the friction pads (11) away from a brake disc (3) of the disc brake (1), said spring (22) comprising an elongated plate (27) bent so as to form:
- a descending fixing stretch (24),
- an ascending resting stretch (25), opposite to the fixing stretch (24),
wherein the fixing stretch (24) forms a fixing seat (30) for fixing the spring (22) by interlocking to a corresponding fixing portion (31) of the friction pad (11),
wherein the fixing seat (30) comprises a through hole (35) formed in an end portion (40) of the fixing stretch (24) and adapted to accommodate a corresponding protrusion (36) of the fixing portion (31),
wherein the resting stretch (25) forms a plate-shaped contact portion (32) for a free abutment with possibility of slipping of the spring (22) against a contact surface (33) of the caliper (2), **characterised in that** a return stretch (26) is formed between the fixing stretch (24) and the resting stretch (25), wherein the return stretch (26) extends from a narrowing region (29), in which the fixing stretch (24) and the resting stretch (25) locally approach each other, to a lower apical region (28) of the spring (22), and
wherein, with the spring (22) undeformed, the contact portion (32) extends, starting from the narrowing region (29), in diverging manner with respect to the fixing stretch (24),
wherein a step (41) is formed between the end portion (40) of the fixing stretch (24) and an adjacent further portion of the fixing stretch (24), which makes an offset, away from the resting stretch (25), of a fixing plane (38) defined by the end portion (40) from an extension plane (39) on which said adjacent portion of the fixing stretch (24) extends.

2. A spring (22) according to claim 1, wherein the return stretch (26) extends from the narrowing region (29) in form of widened loop with respect to the narrowing region (29).

3. A spring (22) according to claim 1 or 2, wherein, with the spring (22) undeformed, the contact portion (32) is inclined with respect to the fixing portion (31) by an inclination angle (34) smaller than 90° or smaller than 60°.

4. A spring (22) according to any one of the preceding claims, wherein the through hole (35) is circular with one or more external recesses (37) with anti-rotation lock function of the spring (22).

5. A spring (22) according to any one of the preceding claims, wherein a free end portion (43) of the resting stretch (25) is bent with respect to the contact portion (32) neighboring with it, in a direction facing away from the fixing stretch (24), so that a convex bending edge (44) facing in the direction opposite to the lower apical region (28) of the spring (22) is formed between the contact portion (32) and the free end portion (43).

6. A spring (22) according to any one of the preceding claims, wherein the spring (22) is formed by a single steel strip bent so as to display only bends about axes parallel to one another and parallel to the plane (55) of the brake disc (3), with the spring (22) mounted in the caliper (2).

7. A disc brake (1) comprising:
- a caliper (2) with two side walls (5) arranged on both sides of a disc plane (55) and forming pad housings (14), wherein the two side walls (5) are connected to each other by end bridges (6) which delimit a central opening (7),
- a pair of friction pads (11) arranged in said pad housings (14) and having a support plate (12) bearing a friction lining (13) and forming support holes (16),
- one or more support pins (15) protruding from the side walls (5) and inserted in the support holes (16) for supporting the friction pads (11);
- one or more springs (22) according to any one of the preceding claims;
wherein the spring (22) is fixed in the disc brake (1) with the return stretch (26) facing a radially inner side (46) of the caliper (2) and wherein the return stretch (26) is completely extended radially more inwards with respect to the friction pad (11), and with the resting stretch (25) and the fixing stretch (24) both extending towards a radially outer side (47) of the caliper (2).

8. A disc brake (1) according to claim 7, wherein the fixing portion (31) is formed on the support plate (12) of the friction pad (11) and the contact surface (33) is formed on the caliper (2).

9. A disc brake (1) according to claim 8, wherein the fixing seat (30) of the spring (22) is locked onto the support plate (12) on an outer side of the friction pad (11) facing away from the brake disc (3) and the contact portion (32) of the spring (22) abuts on a radially inner side in a radially outer direction against a wall portion (45) formed by the inner wall (5) protruding towards the radially inner side (46) of the caliper (2).

10. A disc brake (1) according to claim 9, wherein the contact portion (32) of the spring (11) extends in inclined manner from below the wall portion (45) axially away from the brake disc (3) and radially towards the radially outer side (47) of the caliper (2) and abuts in free contact and with the possibility of sliding on an axially outer edge (48) of a lower edge of the wall portion (45),
and wherein the contact portion (32) applies on the wall portion (45) an axial elastic force towards the brake disc (3) and a radial elastic force towards the radially outer side (47) of the caliper (2),
and wherein the fixing stretch (24) of the spring (22) applies onto the friction pad (11) an axial elastic force away from the brake disc (3) and a radial elastic force towards the radially inner side (46).

11. A disc brake (1) according to any one of the claims from 7 to 10, wherein the fixing portions (31) are formed in the support plate (12) at the same radial height as the supporting holes (16) and each fixing portion (31) is associated with a corresponding supporting hole (16) and distanced from it by less than twice the circumferential width of the supporting hole (16), preferably less than 1.5 times the circumferential width of the supporting hole (16), on one side of the supporting hole (16) facing toward a circumferentially central area (49) of the friction pad (11).

12. A disc brake (1) according to any one of claims 7 to 11, wherein both the supporting holes (16) and the fixing portions (31) are formed in radially inner and circumferentially outer end regions of the support plate (12), wherein said end regions have a radial extension either equal to or smaller than 1/3 of the total radial extension of the friction pad (11) and a circumferential extension either equal to or smaller than 1/3 or either equal to or smaller than 1/4 of the circumferential total extension of the friction pad (11).

13. A disc brake (1) according to any one of claims 8 to 12, wherein the entire end portion (40) of the fixing stretch (24) is received in a recess (42) formed by the fixing portion (31) and which locks the spring (22) against rotations about an axis parallel to the rotation axis (18) of the disc brake (3).

14. A disc brake (1) according to any one of claims 7 to 13, comprising one or more further springs (23) supported by the caliper (2) and positioned on a radially outer side (47) of the caliper (2) and which elastically push against a radially outer edge (51) of the support plate (12) of the friction pad (11).

## Patentansprüche

1. Feder (22) für Reibbeläge (11), welche einem Sattel (2) einer Scheibenbremse (1) für ein elastisches Vorbelasten der Reibbeläge (11) weg von einer Bremsscheibe (3) der Scheibenbremse (1) zuordenbar sind, wobei die Feder (22) eine längliche Platte (27) umfasst, welche derart gebogen ist, dass gebildet ist:
- eine absteigende Fixierstrecke (24),
- eine aufsteigende Ruhestrecke (25) gegenüber der Fixierstrecke (24),
wobei die Fixierstrecke (24) einen Fixiersitz (30) zum Fixieren der Feder (22) durch Verriegeln an einen entsprechenden Fixierungsabschnitt (31) des Reibbelags (11) bildet,
wobei der Fixiersitz (30) ein Durchgangsloch (35) umfasst, welches in einem Endabschnitt (40) der Fixierstrecke (24) gebildet und dazu eingerichtet ist, einen entsprechenden Vorsprung (36) des Fixierabschnitt (31) aufzunehmen,
wobei die Ruhestrecke (25) einen plattenförmigen Kontaktabschnitt (32) für ein freies Anliegen mit Möglichkeit eines Rutschens der Feder (22) gegen eine Kontaktfläche (33) des Sattels (2) bildet,
**dadurch gekennzeichnet, dass** eine Rückkehrstrecke (26) zwischen der Fixierstrecke (24) und der Ruhestrecke (25) gebildet ist, wobei sich die Rückkehrstrecke (26) von einem sich verjüngenden Bereich (29), in welchem sich die Fixierstrecke (24) und die Ruhestrecke (25) lokal aneinander annähern, zu einem unteren Scheitelabschnitt (28) der Feder (22) erstreckt, und
wobei sich, wenn die Feder (22) undeformiert ist, der Kontaktabschnitt (32) beginnend von dem sich verjüngenden Bereich (29) in einer divergierenden Weise bezüglich der Fixierungsstrecke (24) erstreckt,
wobei eine Stufe (41) zwischen dem Endabschnitt (40) der Fixierungsstrecke (24) und einem benachbarten weiteren Abschnitt der Fixierungsstrecke (24) gebildet ist, welche einen Versatz weg von der Ruhestrecke (25) einer Fixierungsebene (38), welche durch den Endabschnitt (40) definiert ist, von einer Erstreckungsebene (39) herstellt, an welcher sich der benachbarte Abschnitt der Fixierungsstrecke (24) erstreckt.

2. Feder (22) nach Anspruch 1, wobei sich die Rückkehrstrecke (26) von dem sich verjüngenden Bereich (29) in Form einer verbreiterten Schleife bezüglich des sich verjüngenden Bereich (29) erstreckt.

3. Feder (22) nach Anspruch 1 oder 2, wobei, wenn die Feder (22) undeformiert ist, der Kontaktabschnitt (32) bezüglich des Fixierungsabschnitts (31) um einen Neigungswinkel (34) geneigt ist, welcher kleiner als 90° oder kleiner als 60° ist.

4. Feder (22) nach einem der vorhergehenden Ansprüche, wobei das Durchgangsloch (35) kreisförmig mit einer oder mehreren externen Ausnehmungen (37) mit einer anti-Rotation-Blockierfunktion der Feder (22) ist.

5. Feder (22) nach einem der vorhergehenden Ansprüche, wobei ein freier Endabschnitt (43) der Ruhestrecke (25) bezüglich des Kontaktabschnitts (32) benachbart dazu in eine Richtung weg von der Fixierungsstrecke (24) weisend gebogen ist, so dass ein konvexer Biegerand (44), welcher in die Richtung entgegengesetzt zu dem unteren Scheitelabschnitt (28) der Feder (22) weist, zwischen dem Kontaktabschnitt (32) und dem freien Endabschnitt (43) gebildet ist.

6. Feder (22) nach einem der vorhergehenden Ansprüche, wobei die Feder (22) durch einen einzelnen Stahlstreifen gebildet ist, welcher derart gebogen ist, dass er lediglich Biegungen um Achsen parallel zueinander und parallel zu der Ebene (55) der Bremsscheibe (3) zeigt, wenn die Feder (22) in dem Sattel (2) montiert ist.

7. Scheibenbremse (1), umfassend:
- einen Sattel (2) mit zwei Seitenwänden (5), welche an beiden Seiten einer Scheibenebene (55) angeordnet sind und Belaggehäuse (14) bilden, wobei die beiden Seitenwände (5) miteinander durch Endbrücken (6) verbunden sind, welche eine zentrale Öffnung (7) begrenzen,
- ein Paar von Reibbelägen (11), welche in den Belaggehäusen (14) angeordnet sind und eine Trageplatte (12) aufweisen, welche eine Reiblinierung (13) trägt und Tragelöcher (16) bildet,
- einen oder mehrere Tragestifte (15), welche von den Seitenwänden (5) vorstehen und in die Tragelöcher (16) zum Tragen der Reibbeläge (11) eingesetzt sind;
- eine oder mehrere Federn (22) nach einem der vorhergehenden Ansprüche;
wobei die Feder (22) in der Scheibenbremse (1) mit der Rückkehrstrecke (26) zu einer radial inneren Seite (46) des Sattels (2) weisend fixiert ist, und wobei die Rückkehrstrecke (26) vollständig sich radial weiter innen bezüglich des Reibbelags (11) erstreckend ist, und wobei sich die Ruhestrecke (25) und die Fixierstrecke (24) beide in Richtung einer radial äußeren Seite (47) des Sattels (2) erstrecken.

8. Scheibenbremse (1) nach Anspruch 7, wobei der Fixierungsabschnitt (31) an der Trageplatte (12) des Reibbelags (11) gebildet ist und die Kontaktfläche (33) an dem Sattel (2) gebildet ist.

9. Scheibenbremse (1) nach Anspruch 8, wobei der Fixierungssitz (30) der Feder (22) auf die Trageplatte (12) an einer äußeren Seite des Reibbelags (11) von der Bremsscheibe (3) weg weisend blockiert ist und der Kontaktabschnitt (32) der Feder (22) an einer radial inneren Seite in einer radial äußeren Richtung gegen einen Wandabschnitt (45) anliegt, welcher durch die innere Wand (5) gebildet ist, welche in Richtung der radial inneren Seite (46) des Sattels (2) vorsteht.

10. Scheibenbremse (1) nach Anspruch 9, wobei sich der Kontaktabschnitt (32) der Feder (11) in einer geneigten Weise von unterhalb des Wandabschnitts (45) axial weg von der Bremsscheibe (3) und radial in Richtung der radial äußeren Seite (47) des Sattels (2) erstreckt und in freiem Kontakt und mit der Möglichkeit eines Rutschens an einem axial äußeren Rand (48) eines unteren Randes des Wandabschnitts (45) anliegt,
und wobei der Kontaktabschnitt (32) auf den Wandabschnitt (45) eine axiale elastische Kraft in Richtung der Bremsscheibe (3) ausübt, sowie eine radiale elastische Kraft in Richtung der radial äußeren Seite (47) des Sattels (2),
und wobei die Fixierungsstrecke (24) der Feder (22) auf den Reibbelag (11) eine axiale elastische Kraft weg von der Bremsscheibe (3) und eine radiale elastische Kraft in Richtung der radial inneren Seite (46) ausübt.

11. Scheibenbremse (1) nach einem der Ansprüche von 7 bis 10, wobei die Fixierungsabschnitte (31) in der Trageplatte (12) bei derselben radialen Höhe wie die Tragelöcher (16) gebildet sind und jeder Fixierungsabschnitt (31) einem entsprechenden Trageloch (16) zugeordnet und von ihm um wenigster als zweimal die Umfangsweite des Tragelochs (16) beabstandet ist, vorzugsweise weniger als 1,5 mal die Umfangsweite des Tragelochs (16), an einer Seite des Tragelochs (16), welche in Richtung eines umfänglich zentralen Bereichs (49) des Reibbelags (11) weist.

12. Scheibenbremse (1) nach einem der Ansprüche 7 bis 11, wobei sowohl die Tragelöcher (16) als auch die Fixierungsabschnitte (31) in radial inneren und umfänglich äußeren Endbereichen der Trageplatte (12) gebildet sind, wobei die Endbereiche eine radiale Erstreckung aufweisen, welche entweder gleich oder kleiner als 1/3 der gesamten radialen Erstreckung des Reibbelags (11) ist, sowie eine umfängliche Erstreckung, welche entweder gleich oder kleiner als 1/3 oder entweder gleich oder kleiner als 1/4 der umfänglichen gesamten Erstreckung des Reibbelags (11) ist.

13. Scheibenbremse (1) nach einem der Ansprüche 8 bis 12, wobei der gesamte Endabschnitt (40) der Fixierungsstrecke (24) in einer Ausnehmung (42) aufgenommen ist, welche durch den Fixierungsabschnitt (31) gebildet ist, und welche die Feder (22) gegen Rotationen um eine Achse parallel zu der Rotationsachse (18) der Scheibenbremse (3) blockiert.

14. Scheibenbremse (1) nach einem der Ansprüche 7 bis 13, umfassend eine oder mehrere Federn (23), welche durch den Sattel (2) getragen und an einer radial äußeren Seite (47) des Sattels (2) positioniert sind und welche elastisch gegen einen radial äußeren Rand (51) der Trageplatte (12) des Reibbelags (11) drücken.

## Revendications

1. Ressort (22) pour des plaquettes de frein (11) pouvant être associées à un étrier (2) d'un frein à disque (1) pour solliciter élastiquement les plaquettes de frein (11) en éloignement d'un disque de frein (3) du frein à disque (1), ledit ressort (22) comprenant une plaque allongée (27) coudée de façon à former :
- une étendue de fixation (24) descendante,
- une étendue d'appui (25) ascendante, opposée à l'étendue de fixation (24),
dans lequel l'étendue de fixation (24) forme un siège de fixation (30) pour fixer le ressort (22) par emboîtement à une portion de fixation (31) correspondante de la plaquette de frein (11),
dans lequel le siège de fixation (30) comprend un trou traversant (35) formé dans une portion d'extrémité (40) de l'étendue de fixation (24) et adapté pour accueillir une saillie (36) correspondante de la portion de fixation (31),
dans lequel l'étendue d'appui (25) forme une portion de contact (32) en forme de plaque pour une butée libre avec possibilité de glissement du ressort (22) contre une surface de contact (33) de l'étrier (2), **caractérisé en ce qu'**une étendue de rappel (26) est formée entre l'étendue de fixation (24) et l'étendue d'appui (25), dans lequel l'étendue de rappel (26) s'étend depuis une région de rétrécissement (29), dans laquelle l'étendue de fixation (24) et l'étendue d'appui (25) se rapprochent localement l'une de l'autre, vers une région apicale inférieure (28) du ressort (22), et
dans lequel, avec le ressort (22) non déformé, la portion de contact (32) s'étend, en partant de la région de rétrécissement (29), de manière divergente par rapport à l'étendue de fixation (24),
dans lequel un décrochement (41) est formé entre la portion d'extrémité (40) de l'étendue de fixation (24) et une portion supplémentaire adjacente de l'étendue de fixation (24), qui réalise un décalage, en éloignement de l'étendue d'appui (25), d'un plan de fixation (38) défini par la portion d'extrémité (40) depuis un plan d'extension (39) sur lequel s'étend ladite portion adjacente de l'étendue de fixation (24).

2. Ressort (22) selon la revendication 1, dans lequel l'étendue de rappel (26) s'étend depuis la région de rétrécissement (29) en forme de boucle élargie par rapport à la région de rétrécissement (29).

3. Ressort (22) selon la revendication 1 ou 2, dans lequel, avec le ressort (22) non déformé, la portion de contact (32) est inclinée par rapport à la portion de fixation (31) d'un angle d'inclinaison (34) inférieur à 90° ou inférieur à 60°.

4. Ressort (22) selon l'une quelconque des revendications précédentes, dans lequel le trou traversant (35) est circulaire avec un ou plusieurs évidements (37) externes avec une fonction de verrouillage antirotation du ressort (22).

5. Ressort (22) selon l'une quelconque des revendications précédentes, dans lequel une portion d'extrémité libre (43) de l'étendue d'appui (25) est coudée par rapport à la portion de contact (32) voisine de celle-ci, dans une direction tournée en éloignement de l'étendue de fixation (24), de sorte qu'un bord de coudage convexe (44) tourné dans la direction opposée à la région apicale inférieure (28) du ressort (22) est formé entre la portion de contact (32) et la portion d'extrémité libre (43).

6. Ressort (22) selon l'une quelconque des revendications précédentes, dans lequel le ressort (22) est formé d'une seule bande d'acier coudée de façon à présenter uniquement des coudes autour d'axes parallèles l'un à l'autre et parallèles au plan (55) du disque de frein (3), avec le ressort (22) monté dans l'étrier (2).

7. Frein à disque (1) comprenant :
- un étrier (2) avec deux parois de côté (5) agencées sur les deux côtés d'un plan de disque (55) et formant des logements de plaquettes (14), dans lequel les deux parois de côté (5) sont raccordées l'une à l'autre par des ponts d'extrémité (6) qui délimitent une ouverture centrale (7),
- une paire de plaquettes de frein (11) agencées dans lesdits logements de plaquettes (14) et ayant une plaque de support (12) portant une garniture de frein (13) et formant des trous de support (16),
- une ou plusieurs broches de support (15) faisant saillie des parois de côté (5) et insérées dans les trous de support (16) pour supporter les plaquettes de frein (11) ;
- un ou plusieurs ressorts (22) selon l'une quelconque des revendications précédentes ;
dans lequel le ressort (22) est fixé dans le frein à disque (1) avec l'étendue de rappel (26) tournée vers un côté radialement intérieur (46) de l'étrier (2) et dans lequel l'étendue de rappel (26) est totalement étendue radialement davantage vers l'intérieur par rapport à la plaquette de frein (11), et avec l'étendue d'appui (25) et l'étendue de fixation (24) s'étendant toutes deux vers un côté radialement extérieur (47) de l'étrier (2).

8. Frein à disque (1) selon la revendication 7, dans lequel la portion de fixation (31) est formée sur la plaque de support (12) de la plaquette de frein (11) et la surface de contact (33) est formée sur l'étrier (2).

9. Frein à disque (1) selon la revendication 8, dans lequel le siège de fixation (30) du ressort (22) est verrouillée sur la plaque de support (12) sur un côté extérieur de la plaquette de frein (11) tourné en éloignement du disque de frein (3) et la portion de contact (32) du ressort (22) bute sur un côté radialement intérieur dans une direction radialement extérieure contre une portion de paroi (45) formée par la paroi intérieure (5) faisant saillie vers le côté radialement intérieur (46) de l'étrier (2).

10. Frein à disque (1) selon la revendication 9, dans lequel la portion de contact (32) du ressort s'étend de manière inclinée depuis le dessous de la portion de paroi (45) axialement en éloignement du disque de frein (3) et radialement vers le côté radialement extérieur (47) de l'étrier (2) et bute en contact libre et avec possibilité de glissement sur un bord axialement extérieur (48) d'un bord inférieur de la portion de paroi (45),
et dans lequel la portion de contact (32) applique sur la portion de paroi (45) une force élastique axiale vers le disque de frein (3) et une force élastique radiale vers le côté radialement extérieur (47) de l'étrier (2),
et dans lequel l'étendue de fixation (24) du ressort (22) applique sur la plaquette de frein (11) une force élastique axiale en éloignement du disque de frein (3) et une force élastique radiale vers le côté radialement intérieur (46).

11. Frein à disque (1) selon l'une quelconque des revendications 7 à 10, dans lequel les portions de fixation (31) sont formées dans la plaque de support (12) à la même hauteur radiale que les trous de support (16) et chaque portion de fixation (31) est associée à un trou de support (16) correspondant et à distance de celui-ci par moins de deux fois la largeur circonférentielle du trou de support (16), de préférence moins de 1,5 fois la largeur circonférentielle du trou de support (16), sur un côté du trou de support (16) tourné vers une zone circonférentiellement centrale (49) de la plaquette de frein (11).

12. Frein à disque (1) selon l'une quelconque des revendications 7 à 11, dans lequel à la fois les trous de support (16) et les portions de fixation (31) sont formés dans des régions radialement intérieures et circonférentiellement extérieures de la plaque de support (12), dans lequel lesdites régions d'extrémité ont une extension radiale soit égale soit inférieure à 1/3 de l'extension radiale totale de la plaquette de frein (11) et une extension circonférentielle soit égale soit inférieure à 1/3 ou soit égale soit inférieure à 1/4 de l'extension totale circonférentielle de la plaquette de frein (11).

13. Frein à disque (1) selon l'une quelconque des revendications 8 à 12, dans lequel la portion d'extrémité (40) entière de l'étendue de fixation (24) est reçue dans un évidement (42) formé par la portion de fixation (31) et qui verrouille le ressort (22) contre des rotations autour d'un axe parallèle à l'axe de rotation (18) du frein à disque.

14. Frein à disque (1) selon l'une quelconque des revendications 7 à 13, comprenant un ou plusieurs ressorts supplémentaires (23) supportés par l'étrier (2) et positionnés sur un côté radialement extérieur (47) de l'étrier (2) et qui poussent élastiquement contre un bord radialement extérieur (51) de la plaque de support (12) de la plaquette de frein (11).
